# FASCICULE DE BREVET EUROPEEN

(11) **EP 4 074 600 B1**
(45) Date de publication et mention de la délivrance du brevet: **15.07.2026**
(21) Numéro de dépôt: 22168506.8
(22) Date de dépôt: 14.04.2022
(51) Int. Cl.: B64D 11/06

(54) **UNITÉ DE SIÈGE POUR PASSAGER D AÉRONEF ET ARRANGEMENT DE CABINE ASSOCIÉ**
SITZEINHEIT FÜR FLUGZEUGPASSAGIER UND ENTSPRECHENDE KABINENANORDNUNG
AIRCRAFT PASSENGER SEAT UNIT AND ASSOCIATED CABIN ARRANGEMENT

(30) Priorité: 16.04.2021 FR 2103964
(43) Date de publication de la demande: 19.10.2022
(73) Titulaire: Airbus Atlantic SAS, 17300 Rochefort (FR)
(72) Inventeur: JÉRÔME, Olivier, 17300 ROCHEFORT (FR); TRILLAUD, Benoît, 17300 ROCHEFORT (FR)
(74) Mandataire: Santarelli

(56) Documents cités:
- WO-A1-03/013903
- WO-A1-2006/021766
- WO-A1-2014/115107
- WO-A2-2013/136080
- FR-A1- 3 006 667
- GB-A- 2 586 273
- US-A1- 2004 195 451
- US-A1- 2007 262 625
- US-A1- 2012 139 300

## Description

### DOMAINE TECHNIQUE

La présente invention appartient au domaine des sièges pour passagers de véhicules de transport, notamment d'avions de ligne, et concerne plus particulièrement une unité de siège pour passager d'aéronef et un arrangement de cabine obtenu avec de telles unités.

La présente invention trouve une application directe dans l'aménagement des classes affaires *(business class* en terminologie anglosaxonne) d'avions moyen ou long-courriers, sans s'y limiter.

### ÉTAT DE L'ART

En transport aérien, le confort des passagers est une composante concurrentielle essentielle. Pour la plupart des compagnies aériennes, ce confort est conditionné par des exigences de rentabilité et de réduction de l'impact environnemental qui se traduisent par des aménagements de haute densité, autrement dit plaçant un maximum de passagers dans l'espace disponible à cet effet.

Le niveau de confort requis dans les classes supérieures (première classe et classe affaires) doit par exemple offrir aux passagers la possibilité de s'allonger dans une position de couchage, surtout lorsque la durée du vol est longue, et de bénéficier d'une certaine intimité vis-à-vis des autres passagers.

Les sièges convertibles en lit sont connus depuis longtemps et existent sous de nombreuses configurations.

Les sièges passagers des avions sont soumis à des contraintes de conception strictes, dont beaucoup ne s'appliquent pas aux sièges d'autres types de véhicules. L'un des problèmes est la nécessité de respecter les normes de sécurité applicables aux sièges passagers des avions, comme le test de 16g qui exige que les sièges survivent à une décélération de 16g en position de décollage/atterrissage. Un autre problème est la nécessité de minimiser le poids du siège, car le fait de transporter un poids supplémentaire sur un avion augmente la consommation de carburant et donc le coût monétaire et environnemental. Le siège doit donc être à la fois solide et léger.

Un autre problème concerne l'utilisation de l'espace. Tout avion a une surface maximale pour les sièges des passagers, qui doit être utilisée de la manière la plus efficace possible afin de maximiser la surface assise et l'espace pour les jambes de chaque passager, tout en permettant une sortie sans entrave du siège. Il est également important, pour des raisons de coût, de faire tenir le plus grand nombre possible de sièges passagers dans l'espace disponible.

Un autre problème concerne le niveau de confort du siège. Les sièges passagers des avions peuvent être utilisés pour des vols de jour, au cours desquels le passager voudra travailler, manger et/ou se détendre, et pour des vols de nuit, au cours desquels le passager voudra dormir. De préférence, un siège passager d'avion devrait pouvoir adopter des positions confortables pour toutes ces activités, tout en étant capable de répondre aux normes de sécurité pertinentes en position de décollage/atterrissage.

Un autre problème concerne les besoins psychologiques et/ou sociaux des passagers de l'avion, qui peuvent souhaiter avoir de l'intimité pendant qu'ils travaillent, mangent ou dorment, ou qui peuvent souhaiter interagir avec un compagnon de voyage. Certaines dispositions sont également indésirables pour des raisons esthétiques ; par exemple, il est préférable que certaines parties du mécanisme du siège ne soient pas visibles par le passager.

Pour les sièges des classes affaires, le passager exige le plus haut niveau de confort possible et il est admis que l'espace disponible permettra d'accueillir moins de sièges passagers que pour la classe économique. Pour les sièges couchettes, il est souhaitable d'offrir un couchage aussi proche que possible d'un lit normal. Cependant, les lits simples normaux sont considérablement plus larges que ce que doit être un siège de passager d'avion.

En règle générale, les sièges passagers les plus confortables sont réservés aux avions long-courriers (ou gros porteurs) et s'agencent dans des arrangements denses avec des rangées transversales comprenant quatre sièges voire plus.

Les cabines relativement étroites des moyen-courriers, surtout ceux de type monocouloir, ne permettent pas aux compagnies d'utiliser des sièges identiques à ceux qu'elles utilisent sur des long-courriers.

De plus, les sièges convertibles des classes affaires et premières classes comportent des mécanismes motorisés complexes actionnant individuellement chaque partie du siège, notamment l'assise et le dossier, qui représentent une certaine masse et un certain coût, inappropriés à une utilisation dans des avions moyen-courriers de largeur de cabine réduite. WO 2013/136080 A2 divulgue une unité de siège selon l'état de la technique.

### PRÉSENTATION DE L'INVENTION

La présente invention vise à pallier les inconvénients de l'art antérieur exposés ciavant et propose une solution simple et économe, qui s'adapte aussi bien aux cabines d'avions long-courriers (gros porteurs) qu'aux cabines d'avions moyen-courriers de type monocouloir, tout en proposant un même niveau de confort pour le passager.

À cet effet, la présente invention a pour objet une unité de siège pour passager d'un moyen de transport tel qu'un avion de ligne selon la revendication 1.

Cette configuration rend l'unité de siège adaptable aux avions long-courriers et moyen-courriers, tout en gardant les mêmes éléments et commodités. Il s'agit d'un avantage considérable par rapport aux solutions de l'art antérieur dans lesquelles les unités de sièges ont des conceptions très différentes selon le type d'avion.

Avantageusement, l'unité de siège comprend un seul mécanisme motorisé pour actionner simultanément les mouvements de l'assise et du dossier du siège, et reste apte à recevoir un ou plusieurs mécanismes motorisés supplémentaires.

Selon un mode de réalisation, au moins un contour en section transversale est inscrit dans un parallélogramme, chaque côté dudit parallélogramme étant au moins partiellement confondu avec une partie rectiligne dudit contour.

Plus particulièrement, le parallélogramme de circonscription n'est pas un rectangle. Selon un mode de réalisation, les parties rectilignes appartiennent respectivement à la cloison arrière, au panneau latéral, à un bord libre de l'assise et à la paroi externe de la console.

De façon avantageuse, le siège présente une surface de couchage horizontale formée par l'assise et le dossier, lorsque ledit siège est dans une position allongée, ladite surface de couchage pouvant être étendue au moyen d'une extension latérale accolée à la console et de l'accoudoir réglable en hauteur et placé au niveau du panneau latéral.

L'accoudoir présente un axe sensiblement parallèle à un axe du siège, ce dernier étant incliné par rapport à l'axe avion.

Un autre objet de l'invention est un arrangement de sièges pour cabine d'avion, comprenant une pluralité d'unités de sièges telles que présentées.

Selon un mode de réalisation, l'arrangement comprend deux groupes latéraux et un groupe central dans une configuration à chevrons (ou en épi).

Selon un autre mode de réalisation, l'arrangement de sièges comprend uniquement deux groupes latéraux comportant chacun une unité de siège par rangée transversale.

Selon un mode de réalisation avantageux, chaque unité de siège présente une distance L sensiblement égale à 1549,4mm.

Enfin, un autre objet de l'invention est un avion de ligne moyen-courrier de type monocouloir, comprenant un arrangement de sièges tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une unité de siège conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à la même échelle. Sur l'ensemble des figures, les éléments identiques ou équivalents portent la même référence numérique.

Il est ainsi illustré en :
- Figure 1 : une vue en perspective avant, du côté console, d'une unité de siège selon un mode de réalisation de l'invention ;
- Figure 2 : une vue en perspective avant, du côté accès, de l'unité de siège ;
- Figure 3 : une vue en perspective arrière de l'unité de siège, laissant apparaitre l'ottoman ;
- Figure 4 : une vue de dessus de l'unité de siège ;
- Figure 5 : l'unité de siège inscrite dans un parallélogramme ;
- Figure 6 : la surface de couchage maximale obtenue avec des unités de sièges successives ;
- Figure 7 : une vue de dessus de l'unité de siège avec le plateau escamotable sorti ;
- Figure 8 : deux unités de sièges accolées du groupe central d'un arrangement selon un mode de réalisation de l'invention ;
- Figure 9 : une rangée transversale d'un arrangement pour cabine d'avion long-courrier ;
- Figure 10 : une rangée transversale d'un arrangement pour cabine d'avion moyen-courrier de type monocouloir ;
- Figure 11 : une vue en perspective arrière de deux unités de sièges successives ;
- Figure 12 : une vue en perspective avant de deux unités de sièges successives.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à une unité de siège pour passager d'aéronef, destinée principalement à l'aménagement d'une classe affaires d'avion de ligne. Cet exemple, non limitatif, est donné pour une meilleure compréhension de l'invention et n'exclut pas l'utilisation d'une unité identique ou similaire dans d'autres moyens de transport adaptés.

Dans la suite de la description, le terme « coque » désigne par extension une structure de réception s'étendant derrière le siège et latéralement à celui-ci, permettant à la fois d'isoler le siège des sièges voisins et de recevoir différentes commodités pour le confort du passager.

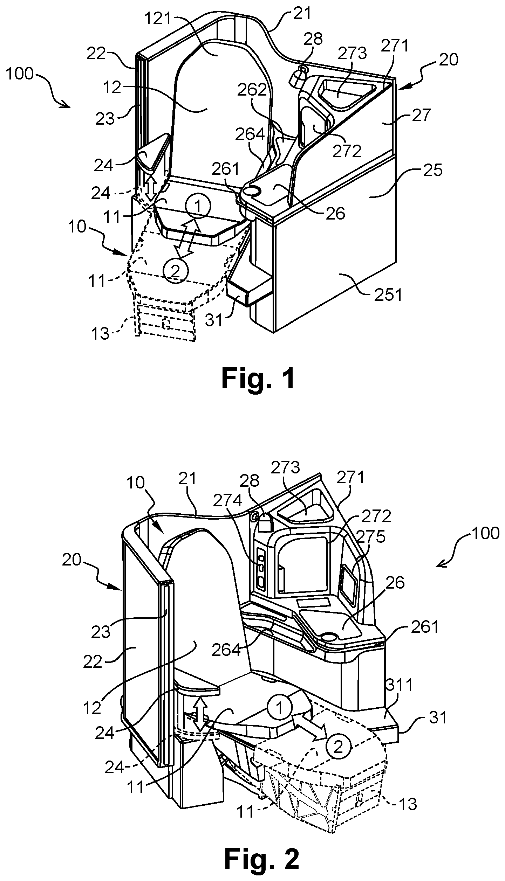

La figure 1 représente une unité de siège 100 comprenant un siège 10 entouré partiellement d'une coque 20 définissant un espace utile du passager et comprenant à cet effet différentes commodités, comme il est d'usage en transport aérien.

Le siège 10 comprend principalement une assise 11 et un dossier 12, tous deux mobiles de sorte que le siège 10 est convertible entre une position assise, dans laquelle le dossier 12 est redressé et forme un angle sensiblement perpendiculaire avec l'assise 11, et une position allongée dans laquelle le dossier est rabattu pour s'aligner avec un plan moyen de l'assise 11 et ainsi former une surface de couchage sensiblement horizontale faisant office de lit pour le passager.

Le siège 10 passe de la position assise à la position allongée, et inversement, de manière continue au moyen d'un seul mécanisme motorisé actionnant à la fois l'assise 11 et le dossier 12. Entre ces deux positions, le siège 10 peut éventuellement occuper au moins une position intermédiaire telle qu'une position « détente » dans laquelle le dossier 12 est incliné par rapport à l'assise 11 d'un angle obtus plus ou moins important.

De préférence et pour une cinématique plus simple, le siège 10 n'occupe aucune position intermédiaire entre la position assise et la position allongée.

Lors d'une transition de la position assise vers la position allongée, le mouvement de l'assise 11 est principalement une translation vers l'avant, de la position 1 à la position 2 comme représenté sur la figure 1, tandis que le mouvement du dossier 12 est composé d'une translation curviligne vers le bas et d'une rotation. Bien entendu, la transition inverse s'accompagne des mouvements respectifs inverses.

Le siège 10 peut présenter une forme quelconque, de préférence cette forme est optimisée pour occuper l'espace disponible et assurer le confort nécessaire au passager. Dans l'exemple illustré, l'assise 11 et le dossier 12 présentent des bords libres en biseau. Cette forme est particulièrement adaptée pour recevoir un appuitête au niveau d'une partie supérieure 121 du dossier 12. L'appui-tête peut être fixe ou amovible pour laisser la liberté au passager de le retirer en position allongée.

Le siège 10 comporte en outre un cache 13 sous l'assise 11 pour dissimuler les éléments d'apparence non désirable tels que le mécanisme motorisé de conversion, les éléments inférieurs de structure, les fixations, etc.

Le siège 10 est disposé au sein de la coque 20 qui est conçue pour être adaptée aux différentes positions dudit siège et pour isoler ledit siège des sièges voisins dans un arrangement de cabine comprenant une pluralité d'unités 100.

La coque 20, de structure complexe, comporte une cloison arrière 21 se prolongeant latéralement au siège 10 par un panneau latéral 22, une porte coulissante 23 agencée à l'intérieur du panneau latéral, un accoudoir 24 réglable situé du côté dudit panneau latéral, une console 25 de l'autre côté du siège surmontée d'une tablette à cocktail 26 et d'un ensemble fonctionnel 27 pour le rangement et le contrôle du siège 10.

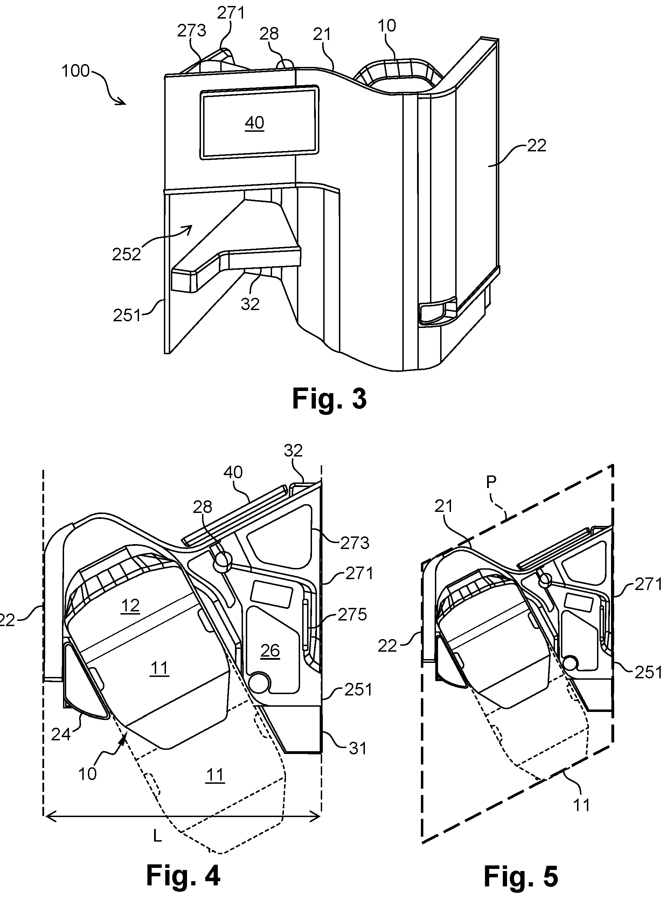

La cloison arrière 21, selon l'exemple de réalisation illustré, présente une partie plane adaptée à recevoir un écran 40 qui sert pour le passager d'une unité de siège placée immédiatement derrière l'unité considérée, comme représenté sur la figure 3, et une partie incurvée faisant jonction entre ladite partie plane et le panneau latéral 22.

Le panneau latéral 22 présente une épaisseur supérieure à celle de la cloison arrière 21 pour recevoir la porte coulissante 23 et une hauteur égale à celle de ladite cloison et suffisante pour assurer l'intimité du passager en position assise.

La porte coulissante 23 permet de préférence de fermer totalement le passage entre deux unités de sièges 100 successives. De ce fait, lorsqu'elle est entièrement fermée, la porte coulissante 23 d'une unité de siège 100 vient affleurer le panneau latéral 22 de l'unité de siège suivante.

L'accoudoir 24 est réglable en hauteur comme indiqué par la flèche à double sens sur les figures 1 et 2. Ce réglage permet au passager d'utiliser l'accoudoir 24 dans sa fonction principale en position assise, auquel cas ledit accoudoir se trouve en position haute, mais également comme extension de la surface de couchage en position allongée, auquel cas l'accoudoir se trouve en position basse.

Du côté opposé, le passager dispose également d'un deuxième accoudoir sous forme d'un évidement 264 ménagé dans la structure de la tablette à cocktail 26.

La console 25, selon l'exemple de réalisation illustré, présente une forme qui, intérieurement, épouse globalement la forme du siège 10 et, extérieurement, s'adapte à la position de l'unité de siège 100 dans l'arrangement de cabine. A cet effet, la console 25 est délimitée par une paroi externe 251 plane pour s'accoler aisément soit à la paroi externe d'une unité de siège identique adjacente dans un groupe central de l'arrangement de cabine, soit à la paroi interne du fuselage lorsque l'unité appartient à un groupe latéral de l'arrangement de cabine. Les arrangements de cabine possibles sont décrits plus loin dans la présente description.

La tablette à cocktail 26 comprend principalement un plateau escamotable 261 et des emplacements 262 permettant au passager de poser différents objets.

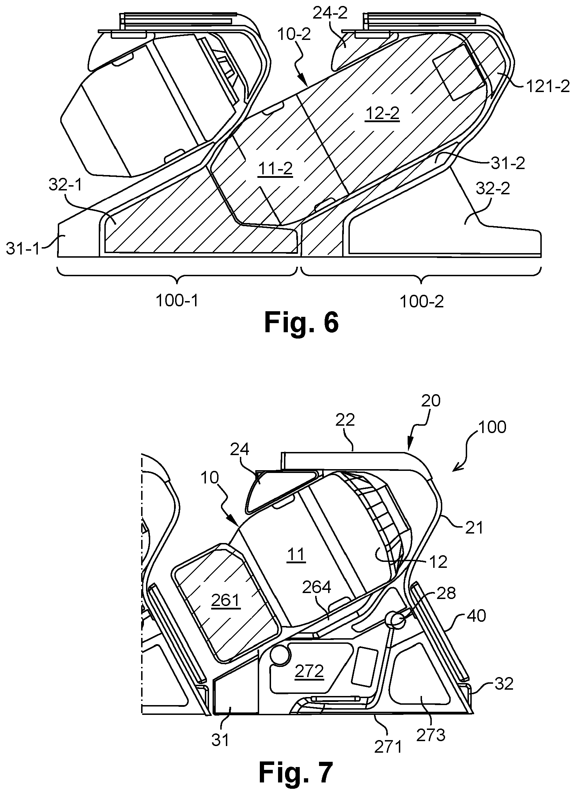

La figure 7 représente en vue de dessus le plateau escamotable 261 sorti de son logement, ledit plateau étant mobile en rotation par rapport à un axe décentré et perpendiculaire au plan de la tablette 26.

L'ensemble fonctionnel 27, selon l'exemple de réalisation illustré, est délimité extérieurement par une paroi 271 plane sensiblement coplanaire à la paroi externe 251 de la console 25, et comprend un compartiment fermé 272 pouvant par exemple recevoir un minibar, un compartiment ouvert 273 pour poser différents effets personnels du passager, une centrale de commande 274 pour par exemple régler la position du siège 10 et un écran tactile 275 pour afficher les données du vol par exemple.

Bien entendu, l'ensemble fonctionnel 27 peut être agencé différemment.

La coque 20 peut en outre comporter d'autres équipements tels qu'un dispositif d'éclairage personnel 28 de type lumière de lecture ou d'ambiance.

L'unité de siège 100 comporte également une extension latérale 31 accolée à la console 25 pour élargir la surface de couchage lorsque le siège 10 est en position allongée. En effet, l'extension latérale 31 présente une surface supérieure 311 située sensiblement au même niveau que la surface de couchage obtenue par les éléments mobiles du siège 10, à savoir l'assise 11 et le dossier 12.

En référence à la figure 3, l'unité de siège 100 comporte un ottoman 32 placé à l'arrière de la coque 20 dans un volume intérieur 252 de la console 25, de sorte à constituer une extension de la surface de couchage du siège de l'unité de siège immédiatement derrière, sur laquelle extension le passager arrière peut poser au moins ses pieds.

La figure 6 représente la surface de couchage maximale pouvant être obtenue avec deux unités de sièges successives, une unité avant 100-1 et une unité arrière 100-2. Cette surface de couchage, représentée en hachures largement espacées, est disponible pour le passager du siège arrière 10-2 et comprend l'assise 11-2 et le dossier 12-2, avec son repose-tête 121-2, dudit siège arrière, l'accoudoir 24-2 et l'extension latérale 31-2 de l'unité arrière, ainsi que l'ottoman 31-1 de l'unité avant.

L'unité de siège 100 offre ainsi le confort nécessaire au passager tout en étant compacte et peu encombrante. Cela lui procure l'avantage de s'adapter à des avions de différentes tailles, notamment des long-courriers tels que l'Airbus A350 et des moyen-courriers de type monocouloir tels que l'Airbus A320.

La figure 4 représente l'unité de siège 100 en vue de dessus pour laisser apparaitre le parallélisme entre le plan du panneau latéral 22 et le plan commun des parois externes 251 et 271, ces deux plans étant représentés en trait interrompu. Cette configuration permet à l'unité de siège 100 d'occuper transversalement la plus petite distance avec une largeur L comprise, par exemple, entre 1000mm et 1550mm, de préférence entre 1016mm (ou 40") et 1549,4mm (ou 61") inclus.

Afin de maintenir une emprise au sol (surface occupée sur le plancher de la cabine) réduite tout en optimisant l'agencement des unités de sièges dans un arrangement « haute densité », l'unité de siège 100 est inscrite dans un parallélogramme P, comme représenté sur la figure 5. Plus précisément, l'unité de siège 100 présente un plus long contour en section transversale inscrit dans un parallélogramme.

En représentation tridimensionnelle, cela se traduit par le fait que l'unité de siège 100 est contenue dans un parallélépipède, de section droite le parallélogramme P, en étant parfaitement adjacente à chacune des faces latérales dudit parallélépipède.

De préférence, le panneau latéral 22 et les parois externes 251 et 271 sont contenus, totalement ou partiellement dans des faces opposées du parallélépipède, tandis que le bord libre de l'assise 11 et une partie de la cloison arrière 21, située juste derrière le dossier, sont contenus, totalement ou partiellement, dans les autres faces opposées du parallélépipède.

Bien entendu, en raison de l'oblicité du siège 10 par rapport à la coque 20 (l'axe du siège étant incliné par rapport à l'axe longitudinal de la coque), le parallélogramme P de circonscription n'est pas un rectangle.

Les caractéristiques géométriques ci-dessus rendent l'unité de siège 100 particulièrement adaptée aussi bien aux arrangements classiques de la classe affaires des long-courriers (gros porteurs) qu'à des arrangements plus restreints sur des moyen-courriers de type monocouloir.

Dans le premier cas, un groupe central peut être constitué en accolant deux à deux des unités de sièges 100 suivant une symétrie spéculaire (en miroir).

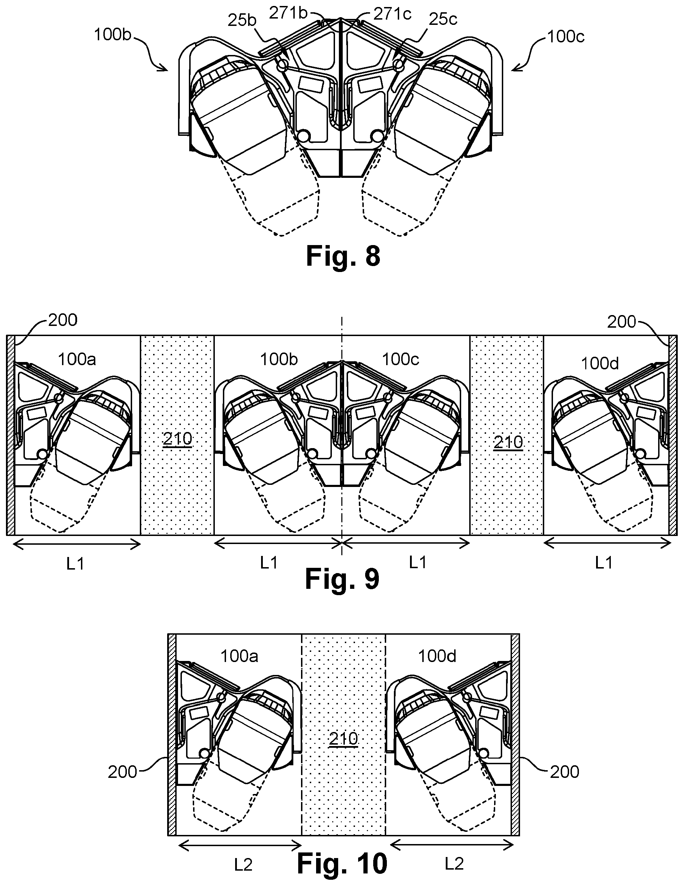

La figure 8 représente une première unité de siège 100b, dite gauche, et une deuxième unité de siège 100c, dite droite, accolées au niveau de leurs consoles 25b et 25c de sorte que les parois externes 271b et 271c sont également accolées. Ainsi, les deux consoles sont bien séparées et isolées l'une de l'autre contrairement aux solutions de l'art antérieur proposant une console centrale commune.

Il convient de noter que les unités 100b et 100c sont identiques à une symétrie près. En effet, dans l'unité gauche 100b, la console 25b se trouve sur la gauche d'un passager du siège de ladite unité, tandis que dans l'unité droite 100c, la console 25c se trouve sur la droite d'un passager du siège de ladite unité.

Le groupe central ainsi obtenu peut être placé entre deux groupes latéraux dans une cabine de gros porteur.

La figure 9 représente une rangée transversale d'un tel arrangement. Ce dernier comprend deux groupes latéraux accolés au fuselage 200 et un groupe central séparé de chacun desdits groupes latéraux par un couloir de circulation 210.

Chaque groupe latéral comprend une unité de siège à chaque rangée transversale, de sorte que le nombre d'unités de sièges par rangée transversale est égal à quatre unités. En effet, chaque rangée transversale dans un arrangement pour gros porteur comprend une première unité 100a, une deuxième unité 100b, une troisième unité 100c identique à la première unité, et une quatrième unité 100d identique à la troisième unité, de sorte à obtenir une configuration A-BA-B.

En soi, l'arrangement de la figure 9 est un arrangement à chevrons (*herringbone* en terminologie anglosaxonne) connu dans l'art.

Toutefois, l'unité de siège 100 selon la présente invention reste également parfaitement adaptée à un arrangement plus restreint destiné aux avions de type monocouloir dans lesquels les compagnies aériennes ne proposent pas d'habitude un tel niveau de confort.

La figure 10 représente une rangée transversale d'un arrangement de cabine pour avion monocouloir, comprenant uniquement deux groupes latéraux sans groupe central. Les groupes latéraux sont accolés chacun au fuselage 200 et séparés l'un de l'autre par un couloir de circulation 210. Dans une rangée transversale, chaque groupe latéral comprend une seule unité de siège. Ainsi, chaque rangée transversale comprend une première unité 100a et une deuxième unité 100d symétriques par rapport à un plan longitudinal médian de la cabine.

Au vu de la différence de largeur entre cabines, les unités de sièges destinées aux gros porteurs présentent une largeur L1 et les unités de sièges destinées aux monocouloirs présentent une largeur L2 de préférence supérieure à L1, moyennant bien entendu un compromis entre confort et masse.

Quel que soit l'arrangement, les sièges sont tous orientés en fuyant les couloirs de circulation adjacents pour plus de tranquillité et moins de distraction par la circulation des passagers et du personnel. Ainsi, les sièges des groupes latéraux sont orientés vers le fuselage et les sièges du groupe central sont orientés vers l'axe central de la cabine.

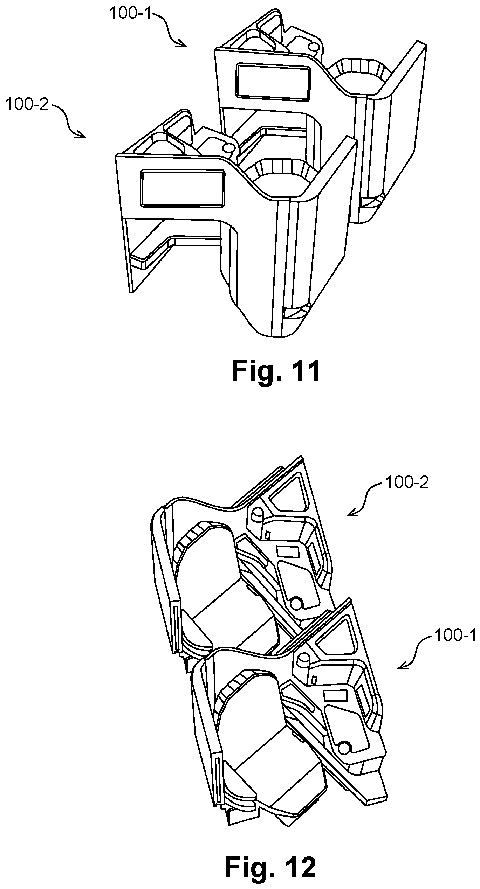

Dans chaque groupe latéral ou central de l'arrangement, les unités 100-1 et 100-2 de rangées transversales successives sont agencées l'une par rapport à l'autre comme représenté sur les figures 11 et 12.

Il ressort clairement de la présente description que certains éléments de l'unité de siège peuvent être modifiés, remplacés ou supprimés et que certains ajustements peuvent être apportés à leurs arrangements, sans pour autant sortir du cadre de l'invention, comme défini par les revendications.

## Revendications

1. Unité de siège (100) pour passager d'un moyen de transport tel qu'un avion de ligne, comprenant un siège (10) convertible en lit et une coque (20) isolant ledit siège de sièges voisins, ledit siège comportant une assise (11) et un dossier (12) mobiles, ladite coque comprenant une cloison arrière (21), un panneau latéral (22), d'un côté du siège, et une console (25) surmontée d'une tablette (26), de l'autre côté du siège, le panneau latéral (22) et une paroi externe (251, 271) de la console (25) étant parallèles et espacés d'une distance L comprise entre 1000mm et 1600mm, **caractérisée en ce qu'**elle comprend un seul mécanisme motorisé pour actionner simultanément les mouvements de l'assise (11) et du dossier (12) du siège (10), de sorte que ledit siège passe d'une position assise à une position allongée et inversement de manière continue, **en ce qu'**elle est apte à recevoir un ou plusieurs mécanismes motorisés supplémentaires, et **en ce qu'**elle comprend un accoudoir (24) réglable en hauteur, placé au niveau du panneau latéral (22), utilisable comme extension de la surface de couchage en position allongée, auquel cas l'accoudoir (24) se trouve en position basse.

2. Unité de siège (100) selon la revendication 1, dans laquelle au moins un contour en section transversale est inscrit dans un parallélogramme (P), chaque côté dudit parallélogramme étant au moins partiellement confondu avec une partie rectiligne dudit contour.

3. Unité de siège (100) selon la revendication 2, dans laquelle le parallélogramme (P) de circonscription n'est pas un rectangle.

4. Unité de siège (100) selon la revendication 2, dans laquelle les parties rectilignes appartiennent respectivement à la cloison arrière (21), au panneau latéral (22), à un bord libre de l'assise (11) et à la paroi externe (251, 271) de la console.

5. Unité de siège (100) selon l'une quelconque des revendications précédentes, dans laquelle le siège (10) présente une surface de couchage horizontale formée par l'assise (11) et le dossier (12), lorsque ledit siège est dans une position allongée, ladite surface de couchage pouvant être étendue au moyen d'une extension latérale (31) accolée à la console (25).

6. Arrangement de sièges pour cabine d'avion, **caractérisé en ce qu'**il comprend une pluralité d'unités de sièges (100) selon l'une quelconque des revendications précédentes.

7. Arrangement de sièges selon la revendication 6, comprenant deux groupes latéraux et un groupe central dans une configuration à chevrons.

8. Arrangement de sièges selon la revendication 6, comprenant uniquement deux groupes latéraux comportant chacun une unité de siège (100) par rangée transversale.

9. Arrangement de sièges selon la revendication 8, dans lequel chaque unité de siège (100) présente une distance L sensiblement égale à 1549,4mm.

10. Avion de ligne moyen-courrier de type monocouloir, **caractérisé en ce qu'**il comprend un arrangement de sièges selon la revendication 8 ou 9.

## Patentansprüche

1. Sitzeinheit (100) für einen Fahrgast eines Transportmittels wie einem Linienflugzeug, umfassend einen Sitz (10), der in ein Bett umgewandelt werden kann, und eine Schale (20), die den benachbarten Sitz isoliert, wobei der Sitz eine bewegliche Sitzfläche (11) und eine bewegliche Rückenlehne (12) aufweist, wobei die Schale eine Rückwand (21), eine Seitenwand (22) auf einer Seite des Sitzes und eine Konsole (25) mit einer darüberliegenden Ablage (26) auf der anderen Seite des Sitzes aufweist, wobei die Seitenwand (22) und eine Außenwand (251, 271) der Konsole (25) parallel angeordnet und um einen Abstand L zwischen 1000 mm und 1600 mm voneinander beabstandet sind, **dadurch gekennzeichnet, dass** sie einen einzigen motorisierten Mechanismus umfasst, um gleichzeitig die Bewegungen der Sitzfläche (11) und der Rückenlehne (12) des Sitzes (10) zu betätigen, so dass der Sitz stufenlos von einer Sitzposition in eine Liegeposition und umgekehrt wechselt, und dadurch, dass sie dazu ausgelegt ist, einen oder mehrere zusätzliche motorisierte Mechanismen aufzunehmen, und **dadurch gekennzeichnet, dass** sie eine höhenverstellbare Armlehne (24) umfasst, die an der Seitenwand (22) angebracht ist und als Liegeflächenverlängerung in Liegeposition nutzbar ist, wobei sich die Armlehne (24) in diesem Fall in der unteren Position befindet.

2. Sitzeinheit (100) nach Anspruch 1, wobei mindestens eine Querschnittskontur in ein Parallelogramm (P) eingeschrieben ist, wobei jede Seite des Parallelogramms mindestens teilweise mit einem geradlinigen Abschnitt der Kontur zusammenfällt.

3. Sitzeinheit (100) nach Anspruch 2, wobei das Umfangsparallelogramm (P) kein Rechteck ist.

4. Sitzeinheit (100) nach Anspruch 2, wobei die geradlinigen Teile jeweils zur Rückwand (21), zur Seitenwand (22), zu einer freien Kante der Sitzfläche (11) und zur Außenwand (251, 271) der Konsole gehören.

5. Sitzeinheit (100) nach einem der vorhergehenden Ansprüche, wobei der Sitz (10) eine horizontale Liegefläche aufweist, die von der Sitzfläche (11) und der Rückenlehne (12) gebildet wird, wenn sich der Sitz in einer Liegeposition befindet, wobei die Liegefläche mittels einer an der Konsole (25) befestigten seitlichen Verlängerung (31) erweitert werden kann.

6. Sitzanordnung für Flugzeugkabine, **dadurch gekennzeichnet, dass** sie eine Vielzahl von Sitzeinheiten (100) nach einem der vorhergehenden Ansprüche umfasst.

7. Sitzanordnung nach Anspruch 6, umfassend zwei Seitengruppen und eine Mittelgruppe in einer Fischgrätenkonfiguration.

8. Sitzanordnung nach Anspruch 6, umfassend nur zwei Seitengruppen, die jeweils eine Sitzeinheit (100) pro Querreihe umfassen.

9. Sitzanordnung nach Anspruch 8, wobei jede Sitzeinheit (100) einen Abstand L aufweist, der im Wesentlichen 1549,4 mm entspricht.

10. Mittelstrecken-Verkehrsflugzeug mit einem einzigen Gang, **dadurch gekennzeichnet, dass** es eine Sitzanordnung gemäß Anspruch 8 oder 9 umfasst.

## Claims

1. Seat unit (100) for a passenger of a means of transport such as an airliner, comprising a seat (10) convertible into a bed and a shell (20) isolating said seat from neighboring seats, said seat comprising a seat section (11) and a backrest (12) that are movable, said shell comprising a rear partition (21), a side panel (22), on one side of the seat, and a console (25) surmounted by a tray (26), on the other side of the seat, the side panel (22) and an outer wall (251, 271) of the console (25) being parallel and spaced apart by a distance L between 1000 mm and 1600 mm, **characterized in that** it comprises a single motorized mechanism for simultaneously actuating the movements of the seat section (11) and of the backrest (12) of the seat (10), such that said seat moves from a seated position to a reclined position and vice versa continuously, and **in that** it is capable of receiving one or more additional motorized mechanisms, and **in that** it comprises a heightadjustable armrest (24), placed on the side panel (22), which can be used as an extension of the lying surface in the reclined position, in which case the armrest (24) is in the low position.

2. Seat unit (100) according to claim 1, wherein at least one cross-sectional contour is inscribed in a parallelogram (P), each side of said parallelogram being at least partially coincident with a straight portion of said contour.

3. Seat unit (100) according to claim 2, wherein the circumscribing parallelogram (P) is not a rectangle.

4. Seat unit (100) according to claim 2, wherein the straight portions respectively belong to the rear partition (21), to the side panel (22), to a free edge of the seat (11), and to the outer wall (251, 271) of the console.

5. Seat unit (100) according to any one of the preceding claims, wherein the seat (10) has a horizontal lying surface formed by the seat section (11) and the backrest (12), when said seat is in a reclined position, said lying surface being extendable by means of a lateral extension (31) adjoined to the console (25).

6. Arrangement of seats for an aircraft cabin, **characterized in that** it comprises a plurality of seat units (100) according to any one of the preceding claims.

7. Arrangement of seats according to claim 6, comprising two side groups and a center group in a chevron configuration.

8. Arrangement of seats according to claim 6, comprising only two side groups each comprising one seat unit (100) per transverse row.

9. Arrangement of seats according to claim 8, wherein each seat unit (100) has a distance L substantially equal to 1549.4 mm.

10. Single-aisle medium-haul aircraft, **characterized in that** it comprises an arrangement of seats according to claim 8 or 9.
